# EUROPÄISCHE PATENTANMELDUNG

(11) **EP 3 987 911 A1**
(43) Veröffentlichungstag der Anmeldung: **27.04.2022**
(21) Anmeldenummer: 21204248.5
(22) Anmeldetag: 22.10.2021
(51) Int. Cl.: A01D 43/08, A01D 43/077

(54) **FELDHÄCKSLER MIT EINEM FÖRDERKANAL ZUM FÖRDERN VON ERNTEGUT UND VERFAHREN ZUM EINSTELLEN EINER BESCHLEUNIGUNG VON ERNTEGUT BEIM ÜBERLADEN VON EINEM FELDHÄCKSLER IN EINEN TRANSPORTWAGEN**

(30) Priorität: 26.10.2020 DE 102020128065
(71) Anmelder: Maschinenfabrik Bernard Krone GmbH & Co. KG, 48480 Spelle (DE)
(72) Erfinder: Menke, Stefan, 46354 Südlohn (DE)

(57) **Zusammenfassung**

Die vorliegende Erfindung betrifft einen Feldhäcksler mit einem Förderkanal zum Fördern von Erntegut in eine Förderrichtung, in dem ein Nachbeschleuniger zum Beschleunigen des Ernteguts angeordnet ist, wobei dem Nachbeschleuniger ein Auswurfkrümmer zum Auswerfen des Ernteguts auf einen Transportwagen nachgeordnet ist, wobei am Auswurfkrümmer ein Auswurfelement angeordnet ist, mit dem ein Auftreffpunkt des Ernteguts, insbesondere im Transportwagen, einstellbar ist, wobei der Feldhäcksler dazu eingerichtet ist, eine Beschleunigung des Ernteguts durch den Nachbeschleuniger in Abhängigkeit von einer Aufprallkraft des Ernteguts auf das Auswurfelement und/oder in Abhängigkeit von einem Stellwinkel des Auswurfelements relativ zum Auswurfkrümmer einzustellen. Die vorliegende Erfindung betrifft weiterhin ein Verfahren zum Einstellen einer Beschleunigung von Erntegut beim Überladen des Ernteguts von einem Feldhäcksler in einen Transportwagen.

## Beschreibung

Die vorliegende Erfindung betrifft einen Feldhäcksler mit einem Förderkanal zum Fördern von Erntegut in eine Förderrichtung, in dem ein Nachbeschleuniger zum Beschleunigen des Ernteguts angeordnet ist, wobei dem Nachbeschleuniger ein Auswurfkrümmer zum Auswerfen des Ernteguts auf einen Transportwagen nachgeordnet ist, wobei am Auswurfkrümmer ein Auswurfelement angeordnet ist, mit dem ein Auftreffpunkt des Ernteguts, insbesondere im Transportwagen, einstellbar ist. Die vorliegende Erfindung betrifft weiterhin ein Verfahren zum Einstellen einer Beschleunigung von Erntegut beim Überladen des Ernteguts von einem Feldhäcksler in einen Transportwagen.

Feldhäcksler sind Erntemaschinen, die zum Ernten und Verarbeiten von stängeligem Erntegut, wie beispielsweise Mais oder Gras zum Einsatz kommen. Hierfür wird typischerweise von einem Trägerfahrzeug ein für das zu erntende Erntegut spezifisches Vorsatzgerät, das zum Abtrennen oder Mähen sowie zum Einziehen des Ernteguts in das Trägerfahrzeug vorgesehen ist, genutzt. Charakteristisch für einen Feldhäcksler ist, dass das Erntegut nach dem Einzug in das Trägerfahrzeug in einer Förderrichtung durch einen Förderkanal und dabei durch eine Zerkleinerungsvorrichtung, die zum Zerkleinern des Ernteguts vorgesehen ist, gefördert wird. Stromabwärts der Zerkleinerungsvorrichtung kann ein Konditionierer zum Zerkleinern von Mais angeordnet sein. Zum Auswerfen und Überladen des Ernteguts auf einen Transportwagen ist weiterhin häufig ein Nachbeschleuniger zum Beschleunigen des Ernteguts stromabwärts der Zerkleinerungsvorrichtung oder des Konditionierers im Förderkanal angeordnet. Dem Nachbeschleuniger ist ein Auswurfkrümmer zum Auswerfen und Überladen des Ernteguts von dem Feldhäcksler auf den Transportwagen nachgeordnet.

Aus der Druckschrift DE 10 2014 102 221 A1 ist ein Feldhäcksler sowie ein Verfahren zum Betreiben des Feldhäckslers bekannt. Der Feldhäcksler weist zumindest einen Sensor auf, mit dem die tatsächliche Transportgeschwindigkeit des verarbeiteten Ernteguts bestimmt wird. Er wird abhängig von dieser betrieben. Dadurch kann der Gutfluss des Ernteguts sowie der Energieverbrauch des Feldhäckslers optimiert werden.

Aufgabe der vorliegenden Erfindung ist es, einen kostengünstigen Feldhäcksler zu schaffen, dessen Leistungsverbrauch während des Überladens des Ernteguts auf einen Transportwagen, insbesondere beim seitlichen Überladen, optimiert ist, so dass der dafür erforderliche Kraftstoffverbrauch gering ist.

Die Aufgabe wird gelöst mit einem Feldhäcksler mit den Merkmalen des unabhängigen Patentanspruchs 1 und einem Verfahren zum Fördern von Erntegut mit den Merkmalen des unabhängigen Patentanspruchs 11. Vorteilhafte Ausführungsformen sind den abhängigen Ansprüchen entnehmbar.

Dafür wird ein Feldhäcksler geschaffen. Der Feldhäcksler weist einen Förderkanal zum Fördern von Erntegut in eine Förderrichtung auf. In dem Förderkanal ist ein Nachbeschleuniger zum Beschleunigen des Ernteguts angeordnet. Dem Nachbeschleuniger ist ein Auswurfkrümmer zum Auswerfen des Ernteguts auf einen Transportwagen nachgeordnet. Weiterhin ist am Auswurfkrümmer ein Auswurfelement angeordnet. Mit dem Auswurfelement ist ein Auftreffpunkt des Ernteguts, insbesondere im Transportwagen, einstellbar.

Der Feldhäcksler zeichnet sich dadurch aus, dass er dazu eingerichtet ist, eine Beschleunigung des Ernteguts durch den Nachbeschleuniger in Abhängigkeit von einer Aufprallkraft des Ernteguts auf das Auswurfelement und/oder in Abhängigkeit von einem Stellwinkel des Auswurfelements relativ zum Auswurfkrümmer einzustellen.

Anhand der Aufprallkraft des Ernteguts auf das Auswurfelement ist ein Rückschluss auf die Geschwindigkeit des Ernteguts möglich. Die Aufprallkraft ist daher ein Maß für die Geschwindigkeit des Ernteguts. Die Erfassung des Stellwinkels ermöglicht einen Rückschluss auf die Position und/oder den Abstand des Transportwagens relativ zum Feldhäcksler. Bei geringem Abstand des Transportwagens vom Feldhäcksler und/oder Positionierung des Transportwagens etwa unterhalb des Auswurfkrümmers, insbesondere unterhalb des Auswurfelements, reicht eine geringere Beschleunigung des Ernteguts aus, um dieses sicher in den Transportwagen zu befördern, gegenüber einem größeren Abstand des Transportwagens vom Feldhäcksler und/oder einer entfernteren Positionierung des Transportwagens vom Feldhäcksler, bei dem eine größere Wurfweite erforderlich ist.

Daher ist es bevorzugt, dass der Feldhäcksler dazu eingerichtet ist, die Beschleunigung des Ernteguts durch den Nachbeschleuniger in Abhängigkeit vom Stellwinkel zu verringern, wenn die Aufprallkraft einen vorgegebenen Grenzwert überschreitet und/oder die Beschleunigung des Ernteguts durch den Nachbeschleuniger in Abhängigkeit vom Stellwinkel zu vergrößern, wenn die Aufprallkraft einen vorgegebenen Grenzwert unterschreitet.

Die Beschleunigung des Ernteguts durch den Nachbeschleuniger ist somit in Abhängigkeit von dem Stellwinkel und/oder der Aufprallkraft einstellbar. Dadurch kann ein übermäßiges Beschleunigen des Ernteguts durch den Nachbeschleuniger beim Überladen des Ernteguts vermieden werden. Dadurch ist der Leistungsverbrauch während des Überladens des Ernteguts auf einen Transportwagen optimiert, so dass der währenddessen erforderliche Kraftstoffverbrauch verringert ist.

Dabei ist es bevorzugt, dass das Auswurfelement an einem auswurfseitigen Ende des Auswurfkrümmer angeordnet ist. Durch Verändern des Stellwinkels des Auswurfelements relativ zum Auswurfkrümmer kann der Auftreffpunkt des Ernteguts im Transportwagen eingestellt werden.

Bei einem seitwärts gerichteten Auswurf des Ernteguts in einen neben dem Feldhäcksler fahrenden Transportwagen ist das Auswurfelement stärker angewinkelt als beim rückwärts gerichteten Überladen in einen hinter dem Feldhäcksler fahrenden Transportwagen. Dadurch ist der Stellwinkel beim seitwärts gerichteten Überladen in der Regel größer, als beim rückwärts gerichteten Überladen des Ernteguts. Zudem ist die erforderliche Wurfweite des Ernteguts beim seitwärts gerichteten Überladen in der Regel geringer, als beim rückwärts gerichteten Überladen, da der Transportwagen beim seitwärts gerichteten Überladen sehr nah oder sogar etwa unterhalb des Auswurfelements fährt. Beim seitwärts gerichteten Überladen muss das Erntegut daher häufig lediglich bis zum Ende des Auswurfkrümmers gelangen, und kann dann in den Transportwagen fallen. Dadurch ist ein Potential zur Reduzierung der Beschleunigung, und daher zur Verringerung des Kraftstoffverbrauchs des Feldhäckslers beim seitwärts gerichteten Überladen besonders groß.

Der Feldhäcksler weist bevorzugt einen Aktor auf, mit dem der Stellwinkel des Auswurfelement relativ zum Auswurfkrümmer einstellbar ist. Weiterhin bevorzugt weist er einen Sensor auf, der zum Messen von Eigenschaften des Aktors eingerichtet ist. Dabei sind die mit dem Sensor gemessenen Eigenschaften bevorzugt ein Maß für die Aufprallkraft des Erntegutes auf das Auswurfelement. In dieser bevorzugten Ausführungsform wird daher nicht die Aufprallkraft des Erntegutes auf das Auswurfelement selbst gemessen, sondern die mit dem Sensor gemessenen Eigenschaften, die ein Maß für die Aufprallkraft des Ernteguts sind. Dadurch ist ein Rückschluss auf die Geschwindigkeit des Ernteguts möglich. Zur Einstellung der Beschleunigung des Ernteguts wird dabei ein ohnehin am Feldhäcksler erforderlicher Aktor genutzt. Als zusätzliches Bauteil erfordert diese Ausführungsform daher lediglich den am Aktor angeordneten Sensor. Die Kosten dafür sind somit sehr gering. Bei dem Feldhäcksler ist daher mit sehr geringem Aufwand der Kraftstoffverbrauch reduzierbar.

Dabei ist der Aktor bevorzugt als ein hydraulischer oder elektrohydraulischer Kolbenzylinder ausgebildet. Besonders bevorzugt misst der Sensor einen Differenzdruck zwischen Kolbenseiten eines Kolbens im Kolbenzylinder und/oder einen Differenzdruck zwischen Vor- und Rücklauf des Kolbenzylinders. Ein solcher Differenzdruck ist ein Maß für die Aufprallkraft des Ernteguts auf das Auswurfelement.

In einer weiteren bevorzugten Ausführungsform ist der Aktor als ein Linearmotor ausgebildet. Vorzugsweise misst der Sensor dann eine Strom- und/oder Spannungsänderung. Die Strom- und/oder Spannungsänderung ist ein Maß für die Aufprallkraft des Ernteguts auf das Auswurfelement.

Das Auswurfelement ist bevorzugt um eine Drehachse drehbar an dem Auswurfende des Auswurfkrümmers angeordnet. Dabei ist der Aktor zum Drehen des Auswurfelements um die Drehachse vorgesehen. Prinzipiell kann das Auswurfelement aber auch verschieblich oder drehverschieblich am Auswurfkrümmer angeordnet sein.

Um die Beschleunigung des Erntegutes anzupassen, ist es bevorzugt, dass der Nachbeschleuniger einen Beschleunigungsrotor aufweist, der zum Beschleunigen des Ernteguts mit diesem zusammenwirkt. In einer bevorzugten Ausführungsform des Nachbeschleunigers, in der der Beschleunigungsrotor, insbesondere mittels Beschleunigungsschaufeln, mechanisch mit dem Erntegut zusammenwirkt, ist der Nachbeschleuniger im Folgenden auch als Wurfbeschleuniger bezeichnet. In einer ebenso bevorzugten Ausführungsform ist der Nachbeschleuniger als Gebläse ausgebildet. In dieser Ausführungsform kann der Nachbeschleuniger einen Beschleunigungsrotor zum Erzeugen eines das Erntegut beschleunigenden Luftstroms aufweisen.

In einer weiteren bevorzugten Ausführungsform weist der Nachbeschleuniger eine Kanalwand mit wenigstens einem Wandelement auf. Besonders bevorzugt ist das Wandelement in einem einstellbaren Abstand zum Beschleunigungsrotor angeordnet.

Durch Verringern des Abstands des Wandelements vom Beschleunigungsrotor wird eine Kanalweite des Nachbeschleunigers verringert, so dass das Erntegut stärker in den Beschleunigungsrotor einfließt, und mehr Erntegut von den Beschleunigungsschaufeln und/oder dem Luftstrom erfasst wird. Zudem muss das Erntegut den Nachbeschleuniger aufgrund der geringeren Kanalweite schneller durchfließen. Die Einstellung des Abstands des Wandelements vom Beschleunigungsrotor bewirkt daher eine Veränderung der Beschleunigung des Ernteguts durch den Nachbeschleuniger. Dabei entspricht ein geringerer Abstand des Wandelements vom Beschleunigungsrotor einer höheren Beschleunigung des Ernteguts.

In einer bevorzugten Ausführung ist das Wandelement verstellbar, insbesondere verschiebbar und/oder verdrehbar, ausgebildet. Durch das Verstellen des Wandelements ist der Abstand zwischen Beschleunigungsrotor und Wandelement einstellbar. Die Einstellung des Abstands des Wandelements zum Beschleunigungsrotor ist ein Maß für die Beschleunigung des Ernteguts durch den Nachbeschleuniger.

In einer besonders bevorzugten Ausführungsform ist die Einstellung des Abstands stufenweise ausführbar. Dadurch erfolgt die Änderung der Beschleunigung durch den Nachbeschleuniger in Beschleunigungsstufen. Zusätzlich zu einer Grundstufe ist bevorzugt mindestens eine weitere Beschleunigungsstufe einstellbar. In der Grundstufe ist der Abstand zwischen Beschleunigungsrotor und Wandelement dabei weiterhin bevorzugt maximal.

In einer weiteren besonders bevorzugten Ausführungsform ist das Wandelement an einer Eintrittsöffnung des Ernteguts in den Nachbeschleuniger angeordnet. Dadurch verändert sich beim Verstellen des Wandelements nicht nur die Kanalweite des Nachbeschleunigers, sondern durch eine solche Positionierung des Wandelements wird das Erntegut auch optimal in die Beschleunigungsschaufeln und/oder den Luftstrom gedrängt. Bereits ein geringes Verstellen des Wandelements bewirkt daher eine deutliche Änderung der Beschleunigung des Ernteguts durch den Nachbeschleuniger.

Die Beschleunigung des Ernteguts durch den Nachbeschleuniger kann zusätzlich oder alternativ mit Hilfe einer und/oder mehrerer weiterer Maßnahmen eingestellt werden. Bevorzugt ist eine Drehzahl des Beschleunigungsrotors des Nachbeschleunigers, und/oder eine Schaufelstellung der Beschleunigungsschaufeln des Beschleunigungsrotors und/oder eine Luftzu- und/oder -abfuhr des Nachbeschleunigers einstellbar.

Zum Steuern oder Regeln der Beschleunigung des Ernteguts ist es weiterhin bevorzugt, dass der Feldhäcksler eine Steuereinrichtung umfasst, die dazu eingerichtet ist, ein Messsignal des Sensors zu erfassen, und die Beschleunigung des Ernteguts durch den Nachbeschleuniger in Abhängigkeit vom erfassten Messsignal und/oder dem eingestellten Stellwinkel einzustellen.

Die Aufgabe wird weiterhin gelöst mit einem Verfahren zum Einstellen einer Beschleunigung von Erntegut beim Überladen des Ernteguts von einem solchen Feldhäcksler in einen Transportwagen, bei dem
a. ein Sensor ein Messsignal, das ein Maß für eine Aufprallkraft des Ernteguts auf ein bewegliches Auswurfelement des Auswurfkrümmers ist, misst,
b. eine Steuereinrichtung das Messsignal erfasst, und
c. die Steuereinrichtung einen Abstand eines Wandelements von einem Beschleunigungsrotor, und/oder eine Drehzahl des Beschleunigungsrotors, und/oder eine Schaufelstellung der Beschleunigungsschaufeln des Beschleunigungsrotors, und/oder eine Luftzu- und/oder -abfuhr eines Nachbeschleunigers in Abhängigkeit von dem Messsignal einstellt.

Dadurch kann ein übermäßiges Beschleunigen des Ernteguts durch den Nachbeschleuniger beim Überladen des Ernteguts vermieden werden. Somit ist der Leistungsverbrauch während des Überladens des Ernteguts auf einen Transportwagen optimiert, so dass der währenddessen erforderliche Kraftstoffverbrauch minimiert ist.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) schematisch einen erfindungsgemäßen Feldhäcksler;
- Fig. 2: in (a) und (b) jeweils schematisch einen Ausschnitt aus dem Feldhäcksler der Fig. 1; und
- Fig. 3: in (a) schematisch einen Nachbeschleuniger des Feldhäckslers der Fig. 1, und in (b) einen Ausschnitt aus (a).

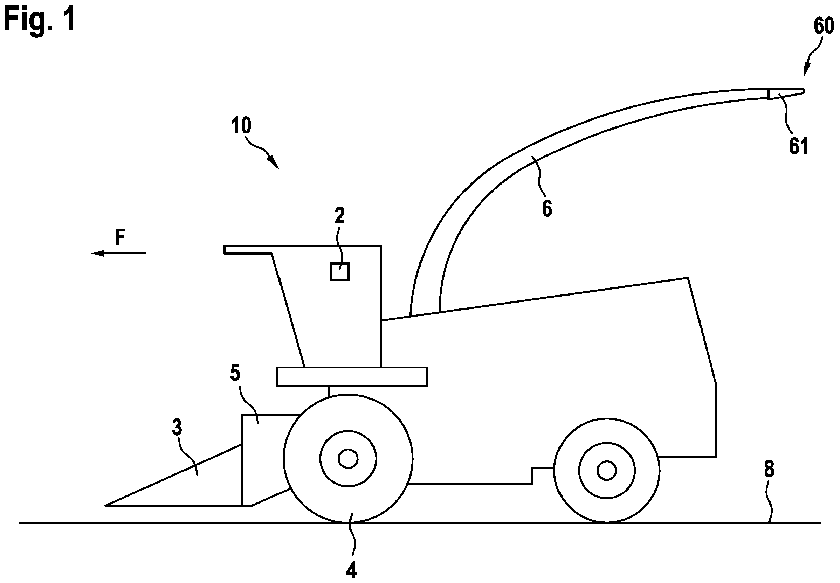

Fig. 1 zeigt einen erfindungsgemäßen Feldhäcksler 10. Der Feldhäcksler 10 weist ein Einzugsaggregat 5 auf, das in einem Erntebetrieb (nicht bezeichnet), in dem der Feldhäcksler 10 in eine Fahrtrichtung F über ein Feld 8 gefahren wird, zum Einziehen von Erntegut (nicht dargestellt) in den Feldhäcksler 10 vorgesehen ist. Das Einzugsaggregat 5 ist zwischen vorderen Rädern 4 des Feldhäckslers in Fahrtrichtung F vorne angeordnet. Zum Ernten des Ernteguts kann am Einzugsaggregat 5 ein Vorsatzgerät 3, beispielsweise ein Maisgebiss zum Ernten von Mais, ein Mähwerk zum Ernten von Gras oder eine Pick-up zur Aufnahme von Gras, verbunden sein. Mit dem Vorsatzgerät 3 wird das Erntegut aufgenommen und in das Einzugsaggregat 5 gefördert.

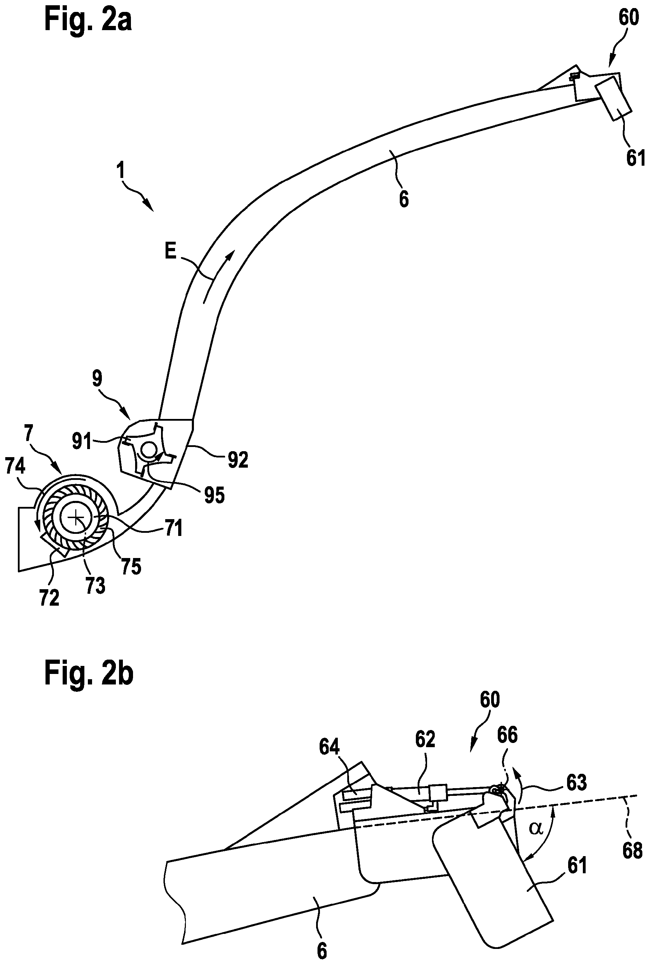

Der Feldhäcksler 10 ist zum Zerkleinern des Ernteguts vorgesehen. Dem Einzugsaggregat 5 ist dafür ein Förderkanal 1 (s. Fig. 2) nachgeordnet, der eine Zerkleinerungsvorrichtung 7 (s. Fig 2) aufweist. Mit der Zerkleinerungsvorrichtung 7 wird das Erntegut im Erntebetrieb des Feldhäckslers 10 zerkleinert. Der Zerkleinerungsvorrichtung 7 kann ein Konditionierer (nicht dargestellt) zum Zerkleinern von Mais und/oder ein Nachbeschleuniger 9 (s. Fig. 2) nachgeordnet sein. Der Förderkanal 1 weist zudem einen Auswurfkrümmer 6 auf, der dem Nachbeschleuniger 9 nachgeordnet ist. Der Auswurfkrümmer 6 ist zum Auswerfen des zerkleinerten Ernteguts auf einen Transportwagen (nicht dargestellt) vorgesehen. An einem offenen, auswurfseitigen Ende 60 des Auswurfkrümmers 6 ist ein verstellbares Auswurfelement 61 angeordnet. Der Auswurfkrümmer 6 ist dreh- und/oder schwenkbar am Förderkanal 1 des Feldhäckslers 10 angeordnet.

Fig. 2 zeigt in (a) und (b) jeweils schematisch einen Ausschnitt aus dem Feldhäcksler der Fig. 1.

In Fig. 2 (a) ist der Förderkanal 1, der dem Einzugsaggregat 5 nachgeordnet ist, dargestellt. Nach dem Einzug durch das Einzugsaggregat 5 wird das Erntegut in eine durch einen Pfeil bezeichnete Förderrichtung E durch den Förderkanal 1 gefördert. Zudem zeigt Fig. 2 (a) die Anordnung der Zerkleinerungsvorrichtung 7 im Förderkanal 1, den der Zerkleinerungsvorrichtung 7 nachgeordneten Nachbeschleuniger 9, sowie den dem Nachbeschleuniger nachgeordneten Auswurfkrümmer 6, an dem auswurfendseitig das Auswurfelement 61 angeordnet ist.

Mit Förder- und Presswalzen (nicht dargestellt) des Einzugsaggregats 5 wird das Erntegut der Zerkleinerungsvorrichtung 7 zugeführt. Die Zerkleinerungsvorrichtung 7 ist hier als Häckselaggregat ausgebildet. Im Folgenden werden daher die Begriffe Zerkleinerungsvorrichtung 7 und Häckselaggregat synonym verwendet. Das Häckselaggregat 7 umfasst eine Häckseltrommel 71 sowie eine Gegenschneide 72, zwischen denen das Erntegut geschnitten wird.

Die Häckseltrommel 71 wird dafür im Betrieb des Feldhäckslers 10 um eine Häckseltrommelachse 73 in eine Häckseltrommeldrehrichtung 74 gedreht. An der Häckseltrommel 71 sind in Häckseltrommeldrehrichtung 74 gleichmäßig verteilt Häckselmesser 75 angeordnet, die zum Schneiden des Ernteguts vorgesehen sind. Im Betrieb des Feldhäckslers 10 drehen sich die Häckselmesser 75 mit der Häckseltrommel 71 in die Häckseltrommeldrehrichtung 74. Dabei gerät das Erntegut in Eingriff der Häckselmesser 75 und wird jeweils zwischen einem der Häckselmesser 75 und der Gegenschneide 72 geschnitten.

In einer Maisernteanordnung (nicht dargestellt) weist der Förderkanal 1 regelmäßig zwischen dem Häckselaggregat 7 und dem Nachbeschleuniger 9 den Konditionierer (nicht dargestellt) auf. Mit dem Konditionierer wird die harte Schale der Maiskörner durch Crackerwalzen (nicht dargestellt) des Konditionierers derart aufgebrochen, dass die Stärke im Inneren der Maiskörner zugänglich ist. Der Konditionierer ist in einer Grasernteanordnung, die bei der Ernte von Gras genutzt wird, nicht vorgesehen, um ein Zerfasern des Grases zu vermeiden. Fig. 2 (a) zeigt den Förderkanal 1 in der Grasernteanordnung. Die Erfindung umfasst aber auch den Feldhäcksler 10 in der Maisernteanordnung.

Nach der Zerkleinerung des Ernteguts wird dieses durch den Auswurfkrümmer 6 in den Transportwagen gefördert. Um das Erntegut dafür ausreichend zu beschleunigen, weist der Förderkanal 1 zwischen dem Häckselaggregat 7 und dem Auswurfkrümmer 6 den Nachbeschleuniger 9 auf.

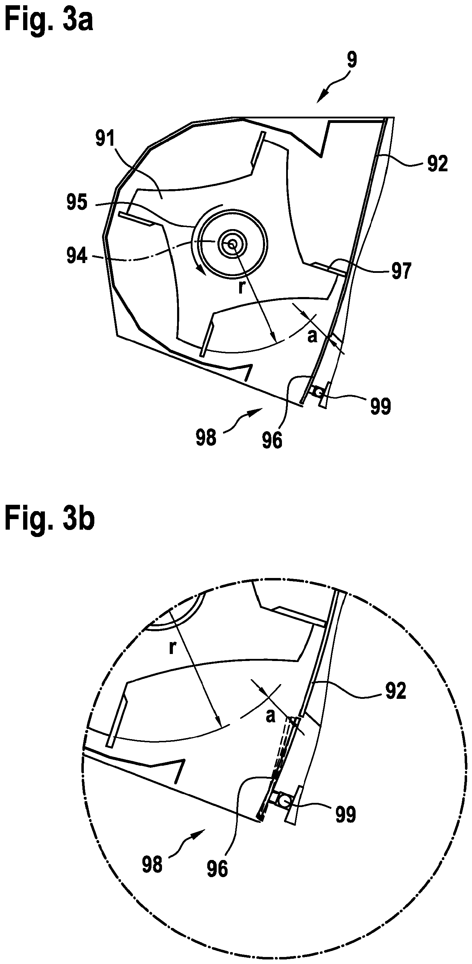

Der Nachbeschleuniger 9 umfasst einen Beschleunigungsrotor 91, der sich im Betrieb des Feldhäckslers 10 um eine Nachbeschleunigerachse 94 (s. Fig. 3) in eine Nachbeschleunigerdrehrichtung 95 dreht. Zudem umfasst der Nachbeschleuniger 9 eine Kanalwand 92 an der das Erntegut entlang gefördert wird.

Der Nachbeschleuniger 9 ist hier als Wurfbeschleuniger dargestellt. Der Nachbeschleuniger 9 kann jedoch auch beispielsweise als ein Gebläse (nicht dargestellt) ausgebildet sein. In dieser Ausführungsform kann der Nachbeschleuniger 9 einen Beschleunigungsrotor zum Erzeugen eines das Erntegut beschleunigenden Luftstroms aufweisen. Der Beschleunigungsrotor kann dann beispielsweise als ein Lüfterrad ausgebildet sein

Nach Beschleunigung durch den Nachbeschleuniger 9 wird das Erntegut durch den Auswurfkrümmer 6 gefördert, an dem das Auswurfelement 61 am auswurfseitigen Ende 60 angeordnet ist. Dabei ist das Auswurfelement 61 hier als eine Auswurfklappe ausgebildet. Im Folgenden werden daher die Begriffe Auswurfelement 61 und Auswurfklappe synonym verwendet. Beim Auswerfen des Ernteguts strömt dieses an der Auswurfklappe 61 entlang und/oder prallt auf diese auf, so dass es von der Auswurfklappe 61 umgelenkt wird. Durch das entlangströmende und/oder aufprallende Erntegut wirkt eine Aufprallkraft auf die Auswurfklappe 61. Für die Erfindung kann statt einer Auswurfklappe 61 jedoch auch ein anderes Auswurfelement 61 verwendet werden, an dem eine Aufprallkraft durch das Erntegut auftritt, wie beispielsweise ein Stutzen, ein Rohr oder ein Leitblech. Weiterhin kann das Auswurfelement 61 statt am auswurfseitigen Ende 60 auch an einem anderen Bereich des Auswurfkrümmers 6 angeordnet sein.

Fig. 2 (b) zeigt einen Ausschnitt des Auswurfkrümmers 6 aus Fig. 2 (a). Die hier dargestellte Auswurfklappe 61 ist derart beweglich ausgebildet, dass mit ihr der Auftreffpunkt des Ernteguts einstellbar ist. Dazu ist sie an einer Drehachse 66 drehbar am Auswurfkrümmer 6 angeordnet. In einer weiteren Ausführungsform kann das Auswurfelement 61 aber auch verschieblich und/oder drehbar ausgebildet sein.

Die Auswurfklappe 61 ist durch einen Aktor 62, der hier als ein Kolbenzylinder ausgebildet ist, verstellbar. Mit Hilfe des Aktors 62 ist die Auswurfklappe 61 um die Drehachse 66 in eine Drehrichtung 63 reversibel drehbar. Bei Verstellung der Auswurfklappe 61 durch den Aktor 62 stellt sich ein Stellwinkel α ein. Der Stellwinkel α erstreckt sich zwischen der Auswurfklappe 61 und einer Tangente 68, die am auswurfseitigen Ende 60 des Auswurfkrümmers 6 an diesen angelegt ist. Durch Veränderung des Stellwinkels α ist der Auftreffpunkt des Ernteguts im Transportwagen einstellbar. Der Kolbenzylinder kann dabei ein pneumatischer, hydraulischer oder elektrohydraulischer Kolbenzylinder sein. Anstelle eines Kolbenzylinders kann ferner auch ein beliebiger Aktor verwendet werden, wie beispielsweise ein Linearmotor oder ein Servomotor. Die Einstellung des Stellwinkels α ist ferner mit Hilfe einer beliebigen Anzahl und/oder Kombination von gleichen und/oder verschiedenen Aktoren durchführbar. Ebenfalls kann der Stellwinkel α durch Verstellen nicht nur von einem Einzigen, sondern mehreren Auswurfelementen 61 eingestellt werden.

Zur Ermittlung der auf die Auswurfklappe 61 wirkenden Aufprallkraft ist hier ein Sensor 64 vorgesehen. Der Sensor 64 misst die Aufprallkraft und/oder Eigenschaften des Aktors 62, die ein Maß für die Aufprallkraft des Ernteguts auf die Auswurfklappe 61 sind. Im dargestellten Ausführungsbeispiel ist der Sensor 64 als Drucksensor ausgebildet. Im Folgenden werden daher die Begriffe Sensor 64 und Drucksensor synonym verwendet. Durch Messen eines Druckes an beiden Kolbenseiten eines Kolbens des Aktors 62 ist ein Differenzdruck zwischen den beiden Kolbenseiten des Aktors 62 ermittelbar. Der ermittelte Differenzdruck ist ein Maß für die Aufprallkraft des Ernteguts auf die Auswurfklappe 61. Dabei beschränkt sich die Erfindung nicht auf die dargestellte Ausführung mit dem einen Drucksensor 64. Es kann auch beispielsweise eine Ermittlung des Differenzdruckes mittels eines einzelnen Differenzdrucksensors oder mehrerer Sensoren erfolgen. Ferner kann auch ein beliebiger anderer Sensor 64 verwendet werden, mit dem ein Maß für die Aufprallkraft des Ernteguts auf die Auswurfklappe 61 ermittelbar ist, wie beispielsweise ein Kraftsensor, ein Dehnmessstreifen oder ein Kraftmessbolzen. Ferner kann das Maß für die Aufprallkraft mit Hilfe einer beliebigen Anzahl und/oder Kombination von gleichen und/oder verschiedenen Sensoren 64 ermittelbar sein.

Fig. 3 zeigt in (a) schematisch einen Nachbeschleuniger 9 des Feldhäckslers 10 der Fig. 1, und in (b) einen Ausschnitt aus (a). Der Nachbeschleuniger 9 ist als Wurfbeschleuniger ausgebildet. Er weist den Beschleunigungsrotor 91 auf, an dem Beschleunigungsschaufeln 97 gleichmäßig verteilt angeordnet sind. Die Beschleunigungsschaufeln 97 sind zum Fördern des Ernteguts vorgesehen. Zum Beschleunigen des Ernteguts ist der Beschleunigungsrotor 91 in eine Nachbeschleunigerdrehrichtung 95 um eine Nachbeschleunigerachse 94 drehbar. Dabei durchsetzen die Beschleunigungsschaufeln 97 den Förderkanal 1 soweit, dass das Erntegut in Eingriff mit den Beschleunigungsschaufeln 97 gerät. Beim Drehen wirkt der Beschleunigungsrotor 91 mit seinen Beschleunigungsschaufeln 97 daher mechanisch auf das Erntegut ein, um dieses zu beschleunigen. Ein dabei von den Beschleunigungsschaufeln 97 jeweils auf das Erntegut einwirkender Impuls beschleunigt dieses ausreichend, so dass es durch den Auswurfkrümmer 6 in den Transportwagen gefördert werden kann.

Zudem weist der Nachbeschleuniger 9 die Kanalwand 92 auf. Die Kanalwand 92 weist ein Wandelement 96 auf, das verstellbar ausgebildet ist. Das Wandelement 96 ist hier an einer Eintrittsöffnung 98 des Nachbeschleunigers 9, an dem das Erntegut in diesen eintritt, angeordnet. Ein Abstand a des Wandelements 96 vom Beschleunigungsrotor 91 ist einstellbar. Dadurch ist ein Grad einer Beschleunigung des Ernteguts durch den Nachbeschleuniger 9 einstellbar. Dafür ist das Wandelement 96 um eine Schwenkachse 99 schwenkbar vorgesehen. Alternativ kann es dafür aber auch verschieblich oder drehverschieblich ausgebildet sein. Beispielhaft ist der Abstand a des Wandelements 96 zu einem Außenradius r des Beschleunigungsrotors 91 dargestellt. Im dargestellten Ausführungsbeispiel ist das Wandelement 96 stufenweise verstellbar.

Alternativ dazu kann der Abstand a auch durch Verstellen des Beschleunigungsrotors 91 gegenüber dem Wandelement 96 veränderbar sein.

Um den Kraftstoffverbrauch des Feldhäckslers 10, insbesondere bei einem seitwärts gerichteten Auswurf des Ernteguts in einen neben dem Feldhäcksler 10 fahrenden Transportwagen, zu optimieren, weist der Feldhäcksler 10 eine Steuereinrichtung 2 auf, die dazu eingerichtet ist, ein Messsignal des Sensors 64 zu erfassen, und das Wandelement 96 in Abhängigkeit von dem Messsignal automatisch einzustellen. Dabei können zusätzlich oder alternativ Erntegutparameter wie beispielsweise die Art, Feuchtigkeit und/oder Größe des geförderten Ernteguts und/oder Betriebsparameter des Feldhäckslers 10 berücksichtigt werden.
Zusätzlich oder alternativ kann die Steuereinrichtung 2 dazu eingerichtet sein, die Beschleunigung des Ernteguts durch den Nachbeschleuniger 9 durch Einstellen einer Drehzahl des Beschleunigungsrotors 91, und/oder Einstellen einer Schaufelstellung der Beschleunigungsschaufeln 97 des Beschleunigungsrotors 91, und/oder Einstellen einer Luftzu- und/oder -abfuhr des Nachbeschleunigers 9 einzustellen.

## Patentansprüche

1. Feldhäcksler (10) mit einem Förderkanal (1) zum Fördern von Erntegut in eine Förderrichtung (E), in dem ein Nachbeschleuniger (9) zum Beschleunigen des Ernteguts angeordnet ist, wobei dem Nachbeschleuniger (9) ein Auswurfkrümmer (6) zum Auswerfen des Ernteguts auf einen Transportwagen nachgeordnet ist, wobei am Auswurfkrümmer (6) ein Auswurfelement (61) angeordnet ist, mit dem ein Auftreffpunkt des Ernteguts, insbesondere im Ladewagen, einstellbar ist, **dadurch gekennzeichnet, dass**
der Feldhäcksler (10) dazu eingerichtet ist, eine Beschleunigung des Ernteguts durch den Nachbeschleuniger (9) in Abhängigkeit von einer Aufprallkraft des Ernteguts auf das Auswurfelement (61) und/oder in Abhängigkeit von einem Stellwinkel (a) des Auswurfelements (61) relativ zum Auswurfkrümmer (6) einzustellen.

2. Feldhäcksler (10) nach Anspruch 1, **dadurch gekennzeichnet, dass** er dazu eingerichtet ist, die Beschleunigung des Ernteguts durch den Nachbeschleuniger (9) in Abhängigkeit vom Stellwinkel (a) des Auswurfelements (61) zu verringern, wenn die Aufprallkraft einen vorgegebenen Grenzwert überschreitet und/oder die Beschleunigung des Ernteguts durch den Nachbeschleuniger (9) in Abhängigkeit vom Stellwinkel (a) des Auswurfelements (61) zu vergrößern, wenn die Aufprallkraft einen vorgegebenen Grenzwert unterschreitet.

3. Feldhäcksler (10) nach einem der vorherigen Ansprüche, **dadurch gekennzeichnet, dass** das Auswurfelement (61) an einem auswurfseitigen Ende (60) des Auswurfkrümmers (6) angeordnet ist.

4. Feldhäcksler (10) nach einem der vorherigen Ansprüche, **dadurch gekennzeichnet, dass** er einen Aktor (62) aufweist, mit dem der Stellwinkel (a) des Auswurfelements (61) relativ zum Auswurfkrümmer (6) einstellbar ist, sowie einen Sensor (64) zum Messen von Eigenschaften des Aktors (62), die ein Maß für die Aufprallkraft des Erntegutes auf das Auswurfelement (61) sind.

5. Feldhäcksler (10) nach einem der vorherigen Ansprüche, **dadurch gekennzeichnet, dass** der Aktor (62) als ein pneumatischer, hydraulischer oder elektrohydraulischer Kolbenzylinder ausgebildet ist, wobei der Sensor (64) einen Differenzdruck zwischen Kolbenseiten eines Kolbens im Kolbenzylinder und/oder einen Differenzdruck zwischen einem Zu- und Rücklauf des Kolbenzylinders misst, oder
dass der Aktor (62) als ein Linearmotor ausgebildet ist, wobei der Sensor (64) eine Strom- und/oder Spannungsänderung misst.

6. Feldhäcksler (10) nach einem der vorherigen Ansprüche, **dadurch gekennzeichnet, dass** das Auswurfelement (61) um eine Drehachse (66) drehbar an dem auswurfseitigen Ende (60) des Auswurfkrümmers (6) angeordnet ist.

7. Feldhäcksler (10) nach einem der vorherigen Ansprüche, **dadurch gekennzeichnet, dass** der Nachbeschleuniger (9) einen Beschleunigungsrotor (91) aufweist, der zum Beschleunigen des Ernteguts mit diesem zusammenwirkt, sowie eine Wandelement (96), wobei das Wandelement (96) in einem einstellbaren Abstand (a) zum Beschleunigungsrotor (91) angeordnet ist.

8. Feldhäcksler (10) nach einem der vorherigen Ansprüche, **dadurch gekennzeichnet, dass** das Wandelement (96) an einer Eintrittsöffnung (98) des Ernteguts in den Nachbeschleuniger (9) angeordnet ist.

9. Feldhäcksler (10) nach einem der vorherigen Ansprüche, **dadurch gekennzeichnet, dass** die Beschleunigung des Ernteguts durch den Nachbeschleuniger (9) durch
• Einstellen einer Drehzahl des Beschleunigungsrotors (91), und/oder
• Einstellen einer Schaufelstellung mindestens einer Beschleunigungsschaufel (97) des Beschleunigungsrotors (91), und/oder
• Einstellen einer Luftzu- und/oder -abfuhr des Nachbeschleunigers (9), einstellbar ist.

10. Feldhäcksler (10) nach einem der vorherigen Ansprüche, **dadurch gekennzeichnet, dass** er eine Steuereinrichtung (2) umfasst, die dazu eingerichtet ist, ein Messsignal des Sensors (64) zu erfassen, und die Beschleunigung des Ernteguts durch den Nachbeschleuniger (9) in Abhängigkeit vom Messsignal und/oder dem eingestellten Stellwinkel (a) einzustellen.

11. Verfahren zum Einstellen einer Beschleunigung von Erntegut beim Überladen des Ernteguts von einem Feldhäcksler (10) nach einem der vorherigen Ansprüche in einen Transportwagen, bei dem
a. ein Sensor (64) ein Messsignal, das ein Maß für eine Aufprallkraft des Ernteguts auf ein bewegliches Auswurfelement (61) des Auswurfkrümmers (6) ist, misst,
b. eine Steuereinrichtung (2) das Messsignal erfasst, und
c. die Steuereinrichtung (2) einen Abstand (a) eines Wandelements (96) vom Beschleunigungsrotor (91), und/oder eine Drehzahl des Beschleunigungsrotors (91), und/oder eine Schaufelstellung mindestens einer Beschleunigungsschaufel (97) des Beschleunigungsrotors (91)
in Abhängigkeit von dem Messsignal einstellt.
